Europäisches Patentamt

(19) **European Patent Office**

**Office européen des brevets**

(11) Publication number: **0 192 338**
**A1**

(12) **EUROPEAN PATENT APPLICATION**

(21) Application number: **86300430.5**

(22) Date of filing: **22.01.86**

(51) Int. Cl.⁴: **B 05 B 13/04**
**B 25 J 9/00**

(30) Priority: **24.01.85 GB 8501776**

(43) Date of publication of application:
**27.08.86 Bulletin 86/35**

(84) Designated Contracting States:
**DE FR GB SE**

(71) Applicant: **HADEN DRYSYS INTERNATIONAL LIMITED**
**7-12 Tavistock Square**
**London WC1H 9LZ(GB)**

(72) Inventor: **Collis, Ronald**
**14 Tandridge Court Mulgrave Road**
**Sutton Surrey(GB)**

(74) Representative: **Needle, Jacqueline et al,**
**PAGE, WHITE & FARRER 5 Plough Place New Fetter Lane**
**London EC4A 1HY(GB)**

(54) A method and system for applying material to surface areas of a body.

㊅ A method and system for applying material to surface areas of a body can be used to automatically spray paint car bodies (2) conveyed through a paint spray booth. The system includes a door manipulator (10) having an associated programmable controller (50) and a painting robot (8) which also has an associated programmable controller (20). As the car body is moved through the spray booth, the manipulator (10) is controlled to open a door thereof. When the door is open, the door manipulator controller (50) generates a door open signal which is applied to said robot controller (20). Upon receipt of the door open signal, the robot controller (20) initiates a robot paint applying sequence to apply paint to the door reveal. As the paint applying sequence is only initiated when the robot controller (20) has received a door open signal it is ensured that the robot and the manipulator cannot get out of sequence.

./...

FIG.2

0192338

## A METHOD AND SYSTEM FOR APPLYING MATERIAL
## TO SURFACE AREAS OF A BODY

The present invention relates to a method and system for applying material to surface areas of a body.

In a paint spray booth where car bodies are painted by robots, it is necessary to open the doors, boot and bonnet lids and other hinged and/or sliding members to enable paint to be applied to the door reveals, the boot and engine compartments and the like. Conventionally this is done manually by operators. Subsequently the doors, lids and other members are closed and again this is also done conventionally by operators.

Of course, if these tasks could be performed reliably by automatic means there would be no need for operators to enter the booth. Thus, the condition of the air within the paint spray booth could be allowed to deteriorate as compared to that necessary for humans and there would be a consequential saving in the energy required by any air conditioning system.

In our International published Patent Application No. WO85/05079 we describe manipulators capable of opening and closing the hinged and/or sliding members of a car body which are suitable for use in a paint spray booth.

Of course, if the painting operation is to be performed by a number of independent devices such as painting robots and manipulators, these devices must be controlled to operate in a correct sequence.

According to a first aspect of the present invention there is provided a method of applying material to surface areas of a body which has at least one hinged and/or sliding member supported thereon, using an applicator device to apply the material and a manipulator to move the hinged and/or sliding member from a first position to a second position, the method comprising the steps of actuating the manipulator to perform a sequence of operations to move said member to said second position, causing said manipulator on completion of said sequence to supply a sequence completed signal to said applicator device, and enabling actuation of said applicator device to perform a material applying cycle in response to the receipt of said sequence completed signal, said material applying cycle of said applicator device being arranged to apply material to surface areas of the body made accessible by the movement of said member to said second position.

The sequence of operations performed by said manipulator could, for example, be arranged to move a door or lid from a closed to an open position. The applicator device would then be enabled to apply material, such as paint, to the door reveals and surround or in the compartment closed by the lid. As the applicator device is enabled upon receipt of the sequence completed signal, the applicator device cannot attempt to paint the door reveals or the compartment before the door or lid is opened. This prevents the applicator device getting out of step with the manipulators. Clearly, this cannot be allowed if a reliable paint finish is to be achieved.

Preferably, the manipulator includes sensing means for sensing conditions of said manipulator, and means for generating said sequence completed signal only in response to the sensing of predetermined conditions.

For example, the manipulator could be provided with engaging means arranged to engage said hinged and/or sliding member, and with sensing means arranged to sense that the engaging means are engaged with said member.  The sequence completed signal would only be generated if the manipulator has completed the sequence of member moving operations and the sensing means show the manipulator to have been engaged by its engaging means with the said member.

Preferably, the sensing means of the manipulator are also arranged to detect if excessive forces are applied to the manipulator and/or other alarm conditions.  Generation of said sequence completed signal is inhibited if such alarm conditions are sensed.

In an embodiment, said applicator device is actuated to perform said material applying cycle only upon receipt of both said sequence completed signal and a condition signal generated when said applicator device is in a predetermined condition.

For example, it can be arranged that said applicator device must be in a home position before actuation thereof is enabled.  In its home position, the applicator device can be arranged to actuate switching means such as magnetic reed switches or proximity switches.

The method of the invention may further comprise the steps of, upon completion of said material applying cycle, causing said applicator device to apply a cycle completed signal to said manipulator, and enabling actuation of said manipulator to perform a further sequence of operations to move said member back to its first position in response to the receipt of said cycle completed signal.

Thus, after the door reveals and surround or the compartment have been painted, for example, the applicator device is arranged to generate the cycle completed signal to enable

- 4 -

actuation of the manipulator to close the door or lid. Again, this ensures that the applicator device and the manipulator do not get out of sequence.

Preferably, the applicator device includes sensing means for sensing conditions of said applicator device, and means for generating said cycle completed signal only in response to the sensing of predetermined conditions.

In an embodiment, said manipulator is actuated to perform said further sequence of operations only upon receipt of both said cycle completed signal and a condition signal generated when said manipulator is in a predetermined condition.

Preferably, the manipulator can be actuated to performm said first sequence of operations only upon receipt of a command signal from said applicator device.

In an embodiment, said manipulator is actuated to perform said first sequence of operations only upon receipt of both said command signal and a condition signal generated when said manipulator is in a predetermined condition. For example, it can be arranged that said manipulator must be in a home position before actuation thereof is enabled. In its home position, the manipulator can be arranged to actuate switching means such as magnetic reed switches or proximity switches.

In an embodiment, said applicator device is arranged to apply paint to said body, and the paint is supplied to said applicator device by way of colour changing means actuable by way of said applicator device.

A system for applying material to surface areas of a body which has at least one hinged and/or sliding member supported thereon, the system comprising an applicator device for applying material, first programmable drive and control means for actuating said applicator device, a manipulator for moving a hinged and/or sliding member betweeen first and second positions, and second programmable drive and control means for actuating said manipulator, wherein said first programmable control means is arranged to be responsive to signals produced by said second programmable control means.

In an embodiment, said applicator device includes sensing means for sensing conditions of said applicator device, and said first programmable control means is arranged to be responsive to said sensing means.

Preferably, said second programmable control means for the manipulator is arranged to be responsive to signals produced by said first control means. Further, said manipulator may include sensing means for sensing conditions of said manipulator, said second control means being responsive to said manipulator sensing means.

Preferably, the system further comprises conveyor means for conveying said bodies. First means are provided to supply signals representative of the movement of a respective body to said first control means. These signals may also be supplied to said second control means.

In an embodiment, said applicator device is movable under the control of said first control means. Second means are provided to supply signals representative of the movement of said applicator device to said first control means.

In an embodiment, said first signal supplying means are arranged to produce output pulses representative of the direction of movement of said body. Said second signal supplying means are arranged to produce output pulses representative of the direction of movement of said applicator device. A summation device is provided and is arranged to add the total of pulses produced by said first signal supplying means to the total of pulses supplied by said second signal supplying means to produce an output signal representative of the relative position of said applicator device and body.

Preferably, said applicator device is a robot having one or more articulated arms, one of which carries a material applicator. The robot is supported on a carriage mounted for movement along a track powered by way of a drive motor. The robot includes a programmable controller arranged to control movement of the arms, and actuation of said applicator and of drive motor.

The robot controller is coupled to receive and supply signals to the programmable control means for said manipulator.

Preferably, said manipulator comprises a support carrying one or more engaging means and supported on a carriage mounted for movement along a track powered by way of a drive motor.

In an embodiment, the robot carriage and the manipulator carriage are arranged for movement along a common track.

The system for applying material defined above may be particularly arranged to apply paint to bodies conveyed through a paint spray booth.

The present invention also extends to a paint spray booth including conveying means for conveying bodies to be spray

0192338

painted through the booth, the booth including a system as defined above for spraying paint onto said bodies, wherein said applicator device includes a paint spray applicator.

Embodiments of the present invention will hereinafter be described with reference to the accompanying drawings, in which:-

Figure 1 shows schematically part of a paint spray booth equipped with an automatic paint applying system for spray painting car bodies;

Figure 2 shows a circuit diagram of a control system for the automatic paint applying system.

Figure 3 is a flow diagram of the logic sequence for a robot carriage position controller of the control system of Figure 2; and

Figure 4 is a flow diagram of the logic sequence for a door manipulator controller of the control system of Figure 2.

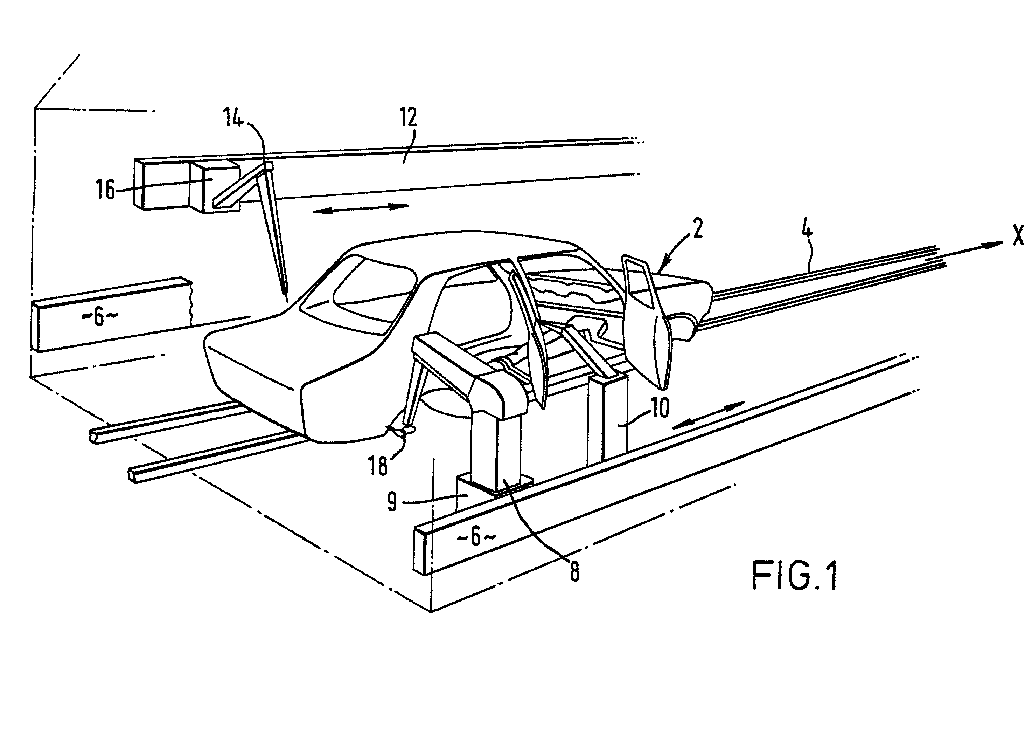

Figure 1 illustrates schematically the interior of a paint spray booth in which car bodies are to be automatically spray painted, that is, without the intervention of operators.

In conventional manner, a car body 2 is arranged to be transported through the paint spray booth in the direction of the arrow X along conveyor tracks 4. Generally, the car body will be transported along the conveyor tracks 4 on a trolley, skids or the like (not shown) at a substantially constant rate.

A respective rail or track 6 is arranged to extend along each side of the booth longitudinally thereof. At least one robot 8 is mounted on a carriage 9 which is arranged to move along a respective track 6. At least one respective door manipulator 10 is also arranged for movement along each track 6. In the embodiment illustrated and described there are two robots 8 and two door manipulators 10 in the booth, but in Figure 1, for clarity, only the robot 8 and the manipulator 10 associated with one side of the booth are illustrated.

A further, upper rail or track 12 is also mounted to extend longitudinally of the spray booth, either along one of the sides thereof or on the roof structure. A boot/bonnet manipulator 14 is carried by way of a carriage 16 which is arranged for movement along the upper slide 12. The booth may include only a single boot/bonnet manipulator 14 as illustrated. Alternatively, two such manipulators 14 may be employed and these may be mounted on the same upper slide 12 or a second upper slide (not shown) may be provided for the second boot/bonnet manipulator.

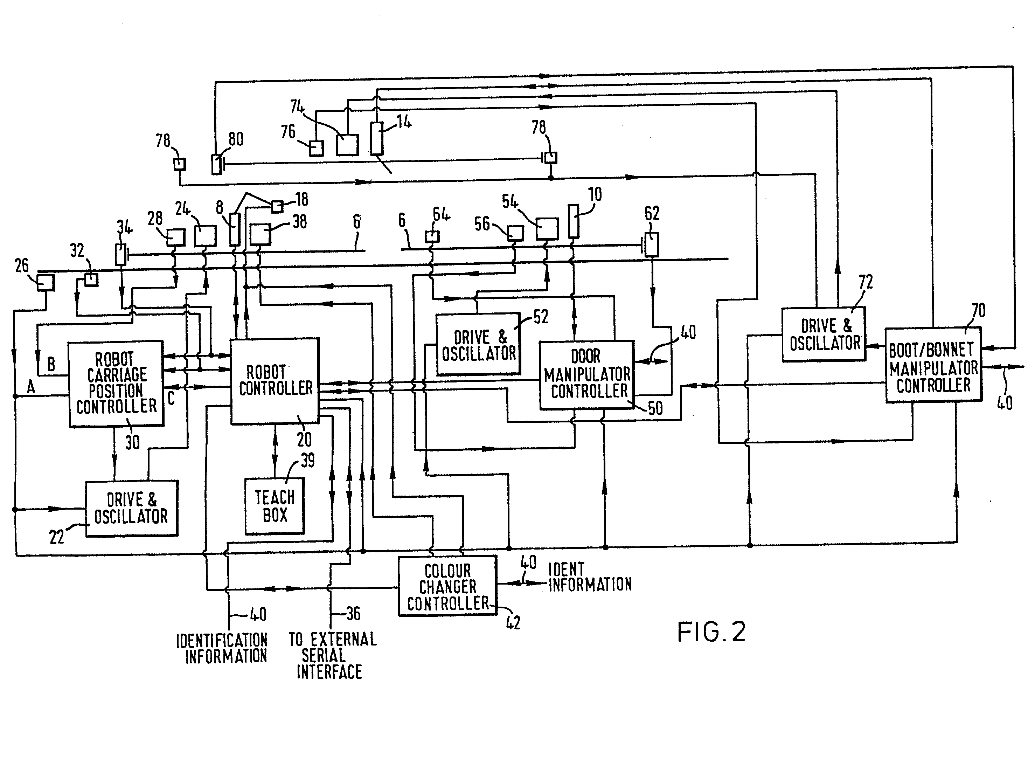

A control system is shown in Figure 2 which is arranged to control the operation of the robots 8, the manipulators 10, and their respective carriages 9, and of the or each boot/bonnet manipulator 14 and its respective carriage 16. All of these elements are controlled such that as a car body passes through the paint spray booth, paint is applied to its surface areas by way of the robots 8. Clearly, door surrounds, and the interior of the engine compartment and of the boot require painting and accordingly, the manipulators are arranged to open and close the doors, boot and bonnet in proper sequence to ensure that all the necessary surface areas of the car body can be painted. Furthermore, all of the elements of the paint applying system are controlled to function automatically such that intervention by operators is not required.

The robots 8 used for applying the paint may be of any suitable construction. As indicated in Figure 1, the robot may have a number of articulated arms and carry an applicator gun 18 which

- 9 -

0192338

is attached to one of the robot arms by way of an articulated wrist connection. The robot is moved and controlled by way of a programmable control system, for example incorporating a microprocessor, a microcomputer, or a computer. Such programmable robots are commercially available and accordingly the robots will not be further described.

The spray applicator gun 18 may be conventional or may be of the type described in our International published Patent application No. WO85/04350.

The door manipulator 10 could also be a programmable robot of substantially conventional type. However, it is preferred that the manipulator 10 be a door manipulator of the type described and claimed in our International published Patent application No. WO85/05079. The door manipulator described in this earlier patent application is controlled by way of electronic programmable control means including a microprocessor. Furthermore, the door manipulator is provided with a plurality of sensing means arranged to supply its control means with information as to the condition of the manipulator. In particular, the sensing means are arranged to sense when the door manipulator is engaged with the car door, and to sense if excessive forces are applied to the manipulator. The door manipulator is supported on a carriage movable along a track, as 6, and driven by way of an electrical stepping motor. Further sensing means are arranged to provide information to the electronic control means representative of the position of the carriage on the track 6.

The boot/bonnet manipulator 14 could also be a programmable robot of substantially conventional type. However, the boot/bonnet manipulator also described in our International published Patent application No. WO85/05079 is particularly suitable for use with the present system. This boot/bonnet manipulator is provided with means for sensing the position of the manipulator on its track 12, for sensing when the manipulator 14 is engaged with a boot or bonnet, and for sensing if excessive forces are being applied thereto. This sensed information is provided to electronic programmable control means for the boot/bonnet manipulator 14.

Figure 2 shows the circuit diagram of a control system for controlling the operation of one robot 8 and one door manipulator 10, and one boot/bonnet manipulator 14. It will be seen that the operation of the robot 8 and of the applicator guns 18 is controlled by way of a programmable electronic robot controller 20 which preferably incorporates a microprocessor. The robot controller 20 is also connected to a position controller 30 which controls a drive and oscillator circuit 22 which actuates a stepping motor 24 for moving the carriage 9 on which the robot 8 is supported. The drive and oscillator circuit 22 is arranged to cause movement of the robot carriage 9 and hence of the robot 8 along the track 6 under the control of the position controller 30 which is commanded by the robot controller 20. The drive and oscillator circuit 22 receives an input from an encoder 26 monitoring the movement of conveyor means for the car body.

It is envisaged that the conveyor means for conveying the car body through the paint spray booths will be substantially conventional and will incorporate a suitable drive for moving the trolley, skids or other means (not shown) on which the car body is supported along the conveyor tracks 4. The conveyor drive is connected to the encoder 26 which is arranged to produce output pulses representative both of the speed of the drive, and hence upon the speed of movement of the trolley, and of the direction of movement of the drive, and hence of the trolley. A similar encoder 28 is associated with the stepping motor 24 of the robot 8 and outputs pulses indicative of the speed and direction of the movement of the stepping motor 24 and hence of the robot carriage 9. Thus, the output pulses from the encoder 26 give information as to the position of the car body within the paint spray booth and the output pulses from the encoder 28 give information as to the position of the robot 8 within the paint spray booth.

The outputs from the encoders 26 and 28 are fed to robot carriage position controller 30. When the trolley and the robot are both moving in the conveying direction X, the output pulses from the encoder 26 are arranged to be positive and the output pulses from the encoder 28 are arranged to be negative. When the robot moves in the opposite direction to the conveying direction X, the output pulses provided by the encoder 28 are arranged to be positive. The position controller 30 is arranged to count the pulses from the encoder 26 to produce a total A representative of the distance travelled by the car body, and to count the pulses from the encoder 28 to produce a total B representative of the position of the robot 8. The position controller 30 is then able to determine the relative position between the robot and the car body and outputs a control signal for the drive and oscillator circuit 22 which moves the robot 8 by way of the robot carriage 9 and the stepper motor 24. Once the robot reaches the position which has been commanded by the robot controller 20, a position achieved signal C is sent by the position controller 30 to the robot controller 20.

As can be seen from Fig. 2, the robot controller 20 has an external serial interface connection as represented by the line 36. This may be used in the first instance to program the robot controller 20. Additionally, and/or alternatively, the movements to be performed by the articulated arms of the robot 8 during individual paint applying cycles of a car body painting program may be programmed in known manner by way of a teach box 39.

The external serial interface connection 36 generally provides communication between the controller 20 and other elements of the control system. For example, safety information or instructions to start or stop the robot may be input to the controller 20 by way of the interface connection 36. Similarly, the controller 20 may output system running information or emergency stop commands for the manipulators and any other equipment by way of the interface connection 36.

The control system includes a connection 40 arranged to feed identification information to the robot controller 20 and to each of the other controllers to be described below. This identification information identifies the model of the car body to be painted, the colour required, the number of doors, whether boot or hatch back, and any other relevant information required.

It will be appreciated that paint has to be supplied to the applicator guns 18, although for clarity, none of the paint supply lines are indicated in the Figures. In known manner, the paint supplied to the applicator guns 18 is sprayed by way of compressed air. It is envisaged that the colour of the paint to be sprayed may be chosen from a number of different colours, the chosen colour being fed to the gun 18 by way of a respective colour change valve 38. Operation of the appropriate colour change valve 38 is under the control of a colour change controller 42 which is in turn controlled by the robot controller 20. The colour change controller 42 is arranged to supply a completion signal to the robot controller 20 at the completion of a colour change operation.

It will be seen from Figure 2 that the robot controller 20 is also responsive to the outputs from two limit switches 32 and 34. The robot carriage position controller 30 is also responsive to the limit switches 32 and 34. The track limit

- 13 -

0192338

switch 32 is tripped by the trolley or other means conveying the car body as this trolley moves into the paint spray booth. Upon receipt of a signal from the track limit switch 32, the robot controller 20 is reset and is actuated to commence the car body painting program. As a first step in this program the robot controller 20 looks to see that the robot 8 is in its home position, the presence of the robot 8 in its home position being signalled when the home limit switch 34 is tripped by the robot 8 or by its carriage.

Thus, at the commencement of a car body painting operation, a car body is conveyed into the paint spray booth. As the car body enters the booth the track limit switch 32 is tripped and the robot controller 20 is reset to the beginning of the car body painting program. If the home limit switch 34 shows that the robot is not in its home position, an alarm will be signalled. However, if the robot is in its home position, the robot controller 20 then proceeds to initiate a first paint applying cycle, for example, to paint the front and bonnet of the car body.

During a paint applying cycle, the robot carriage is moved along its track 6, the arms of the robot are articulated as necessary to position the applicator guns 18, the guns are turned on and off to spray paint, the fan width of the paint applied by the guns is controlled, the paint lines are cleaned, and the colour change valves are switched on and off as required. All of these actions are controlled by the robot controller 20.

Each individual paint applying cycle of the robot 8 is only initiated upon receipt by the robot controller 20 of a position achieved signal C from the position controller 30 which corresponds to a stored value such that the robot is in a predetermined position relative to the car body for that cycle to be initiated.

- 14 -

0192338

Clearly, if the robot is to apply paint to a particular surface area of the car body the robot must be in the correct position relative to the car body if the painting procedure is going to be successful.

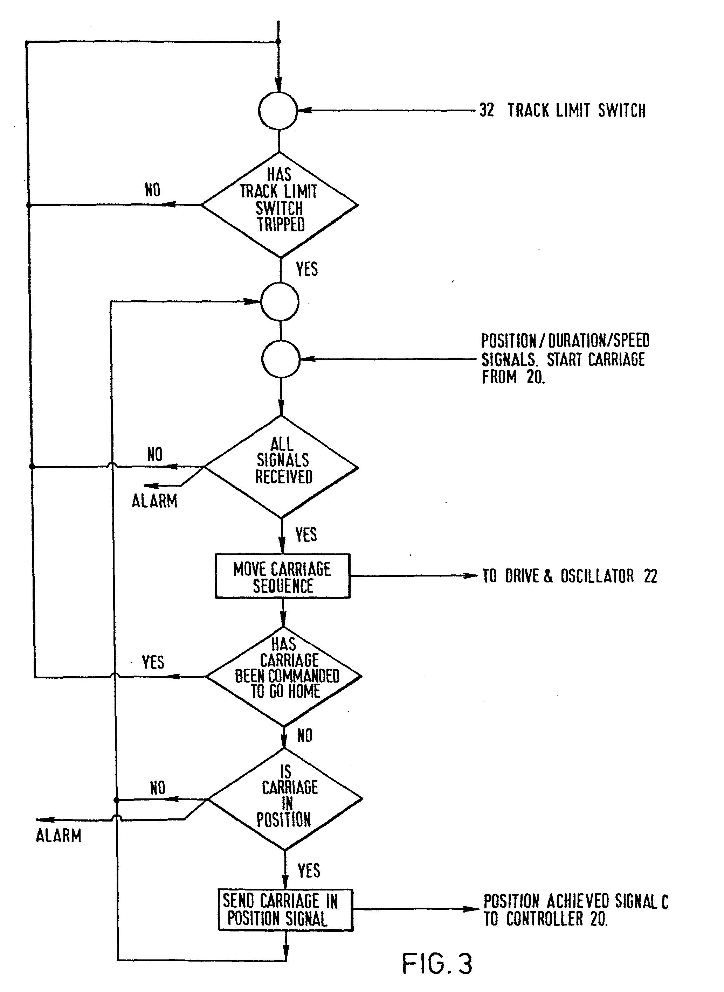

Fig. 3 is a flow diagram illustrating the logic for the control sequence of the robot carriage position controller 30 which brings the robot into the predetermined position before painting is commenced and generates the position achieved signal C.

As will be described in more detail below, the robot controller 20 also looks to find signals from the door manipulator 10, from the boot/bonnet manipulator 14, and from other ancillary equipment before initiating various paint applying cycles. Thus, the robot 8 does not commence its cycle to paint the interior of the bonnet until it has received confirmation from the bonnet opener 14 that the bonnet has been raised, nor will it commence its cycle to paint the reveal and surround of a door until it has received confirmation that the door is open. Similarly, the robot will not commence its paint applying cycle unless the robot controller 20 has received a signal from the colour change controller 42 confirming that a colour change operation has been completed.

At the completion of this first painting cycle to paint the front of the body, the robot controller 20 returns the robot carriage to its home position such that the home limit switch 34 is tripped.

After the completion of the first painting cycle, with the robot 8 out of the way in its home position the boot/bonnet manipulator 14 is arranged to open the bonnet. A further painting cycle of the robot will then be initiated to paint the interior of the bonnet compartment. Thereafter, the boot/bonnet manipulator 14 is arranged to lower the bonnet.

- 15 -                                              0192338

The robot would probably then be arranged to paint the front
wheel arches and the body sill and is again then returned to its
home position. The door manipulator 10 is then arranged to
perform a door opening sequence. A further painting cycle of
the robot is then initiated to paint the door reveal and then
the door is closed by the door manipulator. Thereafter, the
robot will go on to paint further parts of the car body
including the interior of the boot, after this has been raised
by the boot/bonnet manipulator 14.

The sequence of operations described above for painting a car
body are given only by way of example. Clearly, the exact
sequence used will be dependent upon the size and shape of the
body and the number of doors and other hinged and sliding
members of the door. Furthermore, the sequence has been
described above to include the painting of parts of the car body
other than those closely associated with the hinged and sliding
members to be opened and closed. However, it may be preferred
to paint only such closely associated areas in a sequence as
described above, other areas of the car body being painted
either before or after this sequence.

The door manipulator 10 is controlled by its own programmable
electronic door manipulator controller 50. The controller 50 is
arranged to cause a drive and oscillator circuit 52 to actuate a
stepping motor 54 for moving the door manipulator carriage (not
shown) along the track 6. This stepping motor 54 is coupled to
an encoder 56 arranged to provide output pulses representative
of the speed and direction of the travel of the door manipulator
carriage. These output pulses from the encoder 56 are fed to
the door manipulator controller 50.

The door manipulator controller 50 also receives pulses
generated by the encoder 26 and is therefore able to determine
the relative position of the door manipulator 10 and of the

- 16 -

0192338

trolley or other means on which the car body is supported. The door manipulator 10 has a home position in which it is arranged to trip a home limit switch 62 which supplies a signal to the controller 50. A further limit switch 64 is also provided and is arranged to signal the controller 50 when tripped by the door manipulator 10. This limit switch 64 acts as a collision limit switch and represents the closest that the door manipulator 10 is allowed to approach the robot 8. Thus, if this limit swtich 64 is tripped an alarm condition will be initiated by the controller 50.

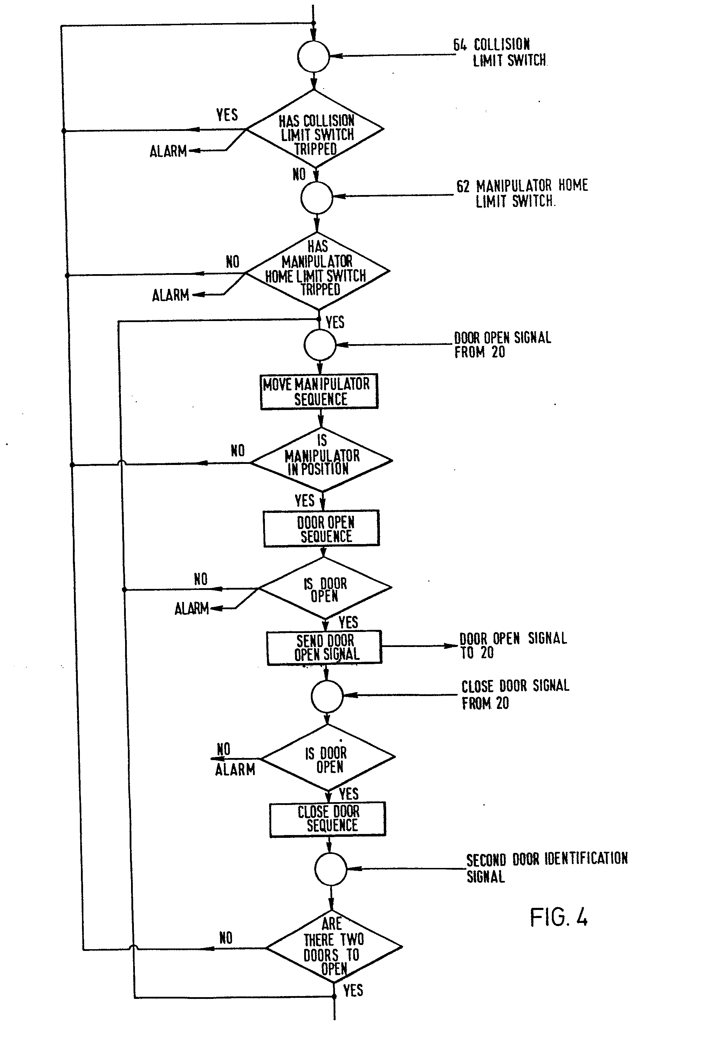

The steps in a door opening cycle are described in detail in our International published patent application No. WO85/05079, the disclosure thereof which is incorporated herein by reference. Accordingly, a further detailed description of the door opening sequence will not be described. Figure 4, however, is a flow diagram showing the control logic sequence of the door manipulator controller 50 for a door opening sequence.

The controller 50 continuously monitors the condition of the home limit switch 62 and the collision limit switch 64 and is in a condition to initiate a door opening sequence if these limit switches show the door manipulator 10 to be in its home position. A door opening sequence is initiated by the robot controller 20 which applies a door open command signal to the controller 50. Generally, to avoid collision between the door manipulator 10 and the robot 8, the robot 8 will be maintained in its home position for the duration of the door opening sequence. Thus, the robot controller 20 looks to see that the robot 8 is in its home position by checking the condition of the home limit switch 34 before it initiates the door opening sequence by commanding the controller 50.

If all the preconditions are satisfied, the controller 50 upon receipt of the door open command signal causes the door manipulator 10 to be moved from its home position in the opposite direction to the conveying direction X at high speed until the controller 50 determines from the outputs of the encoders 56 and 26 that the door manipulator is in the correct position relative to the car body. The door manipulator is then controlled to engage a peg or the like of the door and to open the door. The door is preferably opened by a two stage sequence; in the first stage the part of the manipulator engaging the peg is retracted, and in the second stage the door manipulator is moved along the track 6 at a greater speed than that of the conveyor to provide a differential rate of movement between the door manipulator and the car body to complete the door opening movement. Then, the door manipulator holds the door open and continues to move in the conveying direction of the car body at the same speed as the conveyor. The speed of movement of the door manipulator is controlled by the drive and oscillator circuit 52 which receives output pulses directly from the encoder 26 such that the speed of the manipulator 10 can accurately be maintained at the conveying speed.

The door manipulator 10 is provided with a number of limit switches which enable the door manipulator 10 to signal to its controller 50 that the door has been engaged and has been opened and that there are no overload conditions. Once the controller 50 has received the information that the door has been satisfactorily opened it sends a door open signal to the robot controller 20 to initiate a painting operation. The robot controller 20 then initiates an appropriate painting cycle of the robot during which the door reveals and sills are painted. At the end of this painting cycle the robot 8 is again moved to its home position and, upon receipt of a signal from the home limit switch 34, the robot controller 20 initiates a door closing cycle by sending a close door command signal to the door controller 50. The controller 50 then actuates the door manipulator 10 to perform a door closing sequence which is

- 18 -

0192338

preferably substantially the reverse of the two stage opening sequence. Upon completion of this door closing sequence the door manipulator 10 is parked in its home position as indicated by the limit switch 62. Upon receipt of the signal from the limit switch 62 the controller 50 signals to the robot contoller 20 that the door closing sequence has been completed. The robot controller 20 then initiates the next painting cycle.

The boot/bonnet manipulator 14 is controlled by its own programmable electronic boot/bonnet manipulator controller 70 which communicates with the robot controller 20 in a similar manner to that described above with reference to the door manipulator controller 50. The boot/bonnet controller 70 causes a drive and oscillator circuit 72 to actuate a stepping motor 74 for moving the boot/bonnet manipulator carriage 16 along the upper slide 12. The stepping motor 74 is coupled to an encoder 76 arranged to provide output pulses representative of the speed and direction of the travel of the boot/bonnet manipulator carriage. The output pulses from the encoder 76 are fed to the controller 70 which also receives output pulses from the encoder 26 and can therefore move the manipulator 14 at the conveying speed if required. The output pulses from the two encoders 26 and 76 also enable the controller 70 to determine the relative position of the manipulator 14 and the car body as described previously.

The drive and oscillator circuit 72 receives signals from two spaced track limit switches 78 which trip as the manipulator carriage 16 approaches respective ends of the slide 12 and prevent further movement of the carriage 16. In addition, signals from a home limit switch 80 are supplied to the controller 70. As the controllers 20,42 and 50, the controller 70 also receives the identification information from the connection 40.

0192338

A boot or bonnet opening sequence is initiated upon receipt by the boot/bonnet manipulator controller 70 of a command from the robot controller 20.   Once the boot or bonnet opening sequence has been sensed to have been completed, the boot/bonnet manipulator controller will apply a signal to the robot controller 70 which will initiate the painting cycle during which the interior of the boot or bonnet is painted.  At the completion of this sequence, the robot controller 20 will signal to the controller 70 for the boot/bonnet manipulator to initiate a closing sequence.  As the controller and associated circuitry for the boot/bonnet manipulator is similar to that for the door manipulator, it will not be further described herein and further description of the communication and operations of the boot/bonnet manipulator and of the robot is not required.

It will be seen from the above that each of the elements of the automatic painting system has its own programmable electronic control means.  As each control means only has to be programmed to perform a relatively simple sequence of operations, the programming thereof is relatively simple.  However, each of the control means is arranged such that the sequence of operations it controls cannot be initiated until it has received at least two input signals, one being representative of the condition of the element being controlled, and the other being representative of the condition of one of the other external elements.  Thus,before the door manipulator can be controlled to perform a door opening sequence, its controller 50 has to receive both a signal from its home limit switch 62 and a signal from the robot controller 20 advising that the door opening sequence is now to be initiated.  At the end of the door opening sequence the controller 50 tells the robot controller 20 that the sequence has ended and this initiates the next sequence for the robot 8.

As is described in our International published application No. W085/05079, the door manipulator 10 and the boot/bonnet manipulator 14 are each provided with a number of limit switches and the like which are able to provide alarm signals if the door manipulator does not function as required. The respective controller 50, 70 is programmed to react to these alarm signals in different ways. For example, in certain circumstances the sequence to be performed by the manipulator is aborted and its controller informs the robot controller such that this does not initiate the next painting cycle of the robot.

For example, if the door opening sequence is aborted the robot controller can be caused to skip the painting cycle for painting the door reveal.

Other alarm signals indicate much more serious conditions and either the manipulator controller or the robot controller 20 will be arranged to stop operation of the robot, of the manipulator and of the conveyor system in response to the alarm signal. An audible and/ or visible alarm can also be initiated such that an operator can be called to render assistance.

The automatic paint applying system is described above as including door manipulators 10 for opening doors and boot/bonnet manipulators 14 for opening boots and bonnets. Of course, both type of manipulators can be used to open other hinged and/or sliding members of vehicle or other bodies. Thus, the manipulators could be used to open and close petrol cap covers on vehicle bodies or to open and close doors on refrigerators and the like.

Of course, the method and system of the invention can be used to apply materials other than paint to a vehicle or other body and this coating material need not be applied by spray applicators For exmaple, the materials to be applied include varnishes, lacquers, oils, waxes, undersealing compounds, powders and the like. The applicator gun may be air assisted, airless,

- 21 -                    0192338

electrostatic, or may be operated by a combination of these
and/or other power means.

- 22 -

0192338

CLAIMS:

1. A method of applying material to surface areas of a body which has at least one hinged and/or sliding member supported thereon, using an applicator device to apply the material and a manipulator to move the hinged and/or sliding member from a first position to a second position, the method comprising the steps of actuating the manipulator to perform a first sequence of operations to move said member to said second position, causing said manipulator on completion of said sequence to supply a sequence completed signal to said applicator device, and enabling actuation of said applicator device to perform a material applying cycle in response to the receipt of said sequence completed signal, said material applying cycle being arranged to apply material to surface areas of the body made accessible by the movement of said member to said second position.

2. A method as claimed in Claim 1, wherein said manipulator includes sensing means for sensing conditions of said manipulator, said sequence completed signal is arranged to be generated only when predetermined conditions of the manipulator have been sensed.

3. A method as claimed in Claim 2, wherein the manipulator is provided with engaging means for engaging said hinged and/or sliding member, and the sequence completed signal is arranged to be generated only if said sensing means sense that said engaging means have engaged said member.

4. A method as claimed in Claim 2 or 3, wherein said sensing means are arranged to detect alarm conditions, said sequence completed signal being inhibited if an alarm condition is detected.

- 23 -

0192338

5.   A method as claimed in any preceding claim, further comprising the step of enabling actuation of said applicator device to perform a material applying cycle only upon the receipt of both said sequence completed signal and a condition signal generated when said applicator device is in a predetermined condition.

6.   A method as claimed in any preceding claim, further comprising the steps of, upon completion of said material applying cycle, causing said applicator device to apply a cycle completed signal to said manipulator, and enabling actuation of said manipulator to perform a second sequence of operations to move said member back to its first position in response to the receipt of said cycle completed signal.

7.   A method as claimed in Claim 6, wherein said applicator device includes applicator sensing means for sensing conditions of said applicator device, said cycle completed signal being generated only when predetermined conditions of the applicator device have been sensed.

8.   A method as claimed in Claim 6 or 7, further comprising the step of enabling actuation of said manipulator to perform said second sequence of operations only upon receipt of both said cycle completed signal and a condition signal generated when said manipulator is in a predetermined condition.

9.   A method as claimed in any preceding claim, further comprising the step of enabling actuation of said manipulator to perform said first sequence of operations only upon receipt of a command signal from said applicator device.

- 24 -

0192338

10. A method as claimed in Claim 9, wherein actuation of said manipulator to perform said first sequence of operations is enable only upon receipt of both said command signal and a condition signal generated when said manipulator is in a predetermined condition.

11. A method as claimed in any preceding claim, wherein said applicator is arranged to apply paint to said body.

12. A system for applying material to surface areas of a body which has at least one hinged and/or sliding member supported thereon, the system comprising an applicator device for applying material, first programmable drive and control means for actuating said applicator device, a manipulator for moving a hinged and/or sliding member between first and second positions, and second programmable drive and control means for actuating said manipulator, wherein said first programmable control means is arranged to be responsive to signals produced by said second programmable control means.

13. A system as claimed in Claim 12, wherein said applicator device includes applicator sensing means for sensing conditions of said applicator device, and said first programmable control means is arranged to be responsive to said applicator sensing means.

14. A system as claimed in Claim 12 or 13, wherein said second programmable control means for the manipulator is arranged to be responsive to signals produced by said first control means.

15. A system as claimed in any of Claims 12 to 14, wherein said manipulator has manipulator sensing means for sensing conditions of said manipulator, said second control means being responsive to said manipulator sensing means.

16. A system as claimed in Claim 15, wherein said manipulator is provided with engaging means arranged to engage said hinged and/or sliding member, and said manipulator sensing means are arranged to sense if the engaging means are engaged with said member.

17. A system as claimed in Claim 15 or 16, wherein said manipulator sensing means are arranged to detect if excessive forces are applied to the manipulator.

18. A system as claimed in any of Claims 12 to 17, further comprising conveyor means for conveying said bodies, and first signal generating means for generating signals representative of the movement of each said body, said first control means being arranged to receive and being responsive to signals from said first signal generating means.

19. A system as claimed in Claim 19, wherein said second control means are arranged to receive and are responsive to said signals from said first signal generating means.

20. A system as claimed in Claim 18 or 19, wherein said applicator device is movable under the control of said first control means, and further comprising second signal generating means for generating signals representative of the movement of said applicator device, said first control means being arranged to receive and being responsive to the signals from said second signal generating means.

21. A system as claimed in Claim 20, wherein said first signal generating means are arranged to produce output pulses representative of the direction of movement of said body, and said second signal generating means are arranged to produce output pulses representative of the direction of movement of

- 26 -

0192338

said applicator device, and further comprising a summation device arranged to add the total of pulses produced by said first signal generating means to the total of pulses supplied by said second signal generating means to produce an output signal representative of the relative position of said applicator device and body.

22. A system as claimed in any of Claims 12 to 21, wherein said applicator device is a robot having one or more articulated arms, one of which carries a material applicator, the robot being supported on a carriage mounted for movement along a track powered by way of a drive motor, and the robot including a programmable controller arranged to control movement of the arms, and actuation of said material applicator and of said drive motor.

23. A system as claimed in Claim 22, wherein the robot controller is coupled to receive and supply signals to the programmable control means for said manipulator.

24. A system as claimed in any of Claims 12 to 21, wherein said manipulator comprises a support carrying one or more engaging means and supported on a carriage mounted for movement along a track powered by way of a drive motor.

25. A system as claimed in Claim 24 and Claim 22, wherein the robot carriage and the manipulator carriage are arranged for movement along a common track.

26. A paint spray booth including conveying means for conveying bodies to be spray painted through the booth, the booth including a system as claimed in any of Claims 12 to 25 for spraying paint onto said bodies, and wherein said applicator device includes a paint spray applicator.

FIG.1

FIG.2

2/4

0192338

3/4                                                    0192338

32  TRACK LIMIT SWITCH

HAS TRACK LIMIT SWITCH TRIPPED — NO

YES

POSITION / DURATION/SPEED SIGNALS. START CARRIAGE FROM 20.

ALL SIGNALS RECEIVED — NO — ALARM

YES

MOVE CARRIAGE SEQUENCE → TO DRIVE & OSCILLATOR 22

HAS CARRIAGE BEEN COMMANDED TO GO HOME — YES

NO

IS CARRIAGE IN POSITION — NO — ALARM

YES

SEND CARRIAGE IN POSITION SIGNAL → POSITION ACHIEVED SIGNAL C TO CONTROLLER 20.

FIG. 3

0192338

FIG. 4

European Patent
Office

**EUROPEAN SEARCH REPORT**

0192338
Application number

EP  86 30 0430

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 342 536  (AKEEL et al.)<br><br>* Column 4,  line 9 - column 5, line 19; figures 1,2,6 * | 1-4,6, 7,9,11 | B 05 B    13/04<br>B 25 J     9/00 |
| A |  | 16,18, 19,24-26 |  |
|   | --- |  |  |
| X | GB-A-2 088 095  (TOKICO)<br>*  Page 7, line 90 - page 8, line 35; figures 15,16 * | 1,6,11 |  |
|   | --- |  |  |
| A | EP-A-0 038 654  (HALL AUTOMATION)<br><br>*  Page  11,  line  9 to the end; figure 1 * | 5,7,13 ,18,20 -22 |  |
|   | --- |  | TECHNICAL FIELDS SEARCHED (Int. Cl.4) |
| A | EP-A-0 110 664  (TOKICO) |  | B 05 B<br>B 25 J<br>B 60 J<br>G 05 B |
|   | --- |  |  |
| A | GB-A-2 114 024  (TOYO KOGYO) |  |  |
|   | ----- |  |  |

The present search report has been drawn up for all claims

| Place of search | Date of completion of the search | Examiner |
|---|---|---|
| THE HAGUE | 09-06-1986 | JUGUET J.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03 82